(19) **Europäisches Patentamt**

**European Patent Office**

**Office européen des brevets**

(11) **EP 0 749 226 B1**

(12) **FASCICULE DE BREVET EUROPEEN**

(45) Date de publication et mention
de la délivrance du brevet:
**11.12.2002 Bulletin 2002/50**

(51) Int Cl.7: **H04L 12/56**, H04Q 11/04

(21) Numéro de dépôt: **96401274.4**

(22) Date de dépôt: **12.06.1996**

(54) **Procédé et dispositif de régulation d'accès à un réseau numérique de télécommunications**

Methode und Apparat zum Kontrollieren des Zugangs zu einem digitalen Kommunikationsnetzwerk

Method and apparatus for controlling access to a digital telecommunications network

(84) Etats contractants désignés:
**DE GB**

(30) Priorité: **15.06.1995 FR 9507144**

(43) Date de publication de la demande:
**18.12.1996 Bulletin 1996/51**

(73) Titulaire: **FRANCE TELECOM**
**75015 Paris (FR)**

(72) Inventeur: **Guibert, Jacky**
**92130 Issy-les-Moulineaux (FR)**

(74) Mandataire: **Fort, Jacques et al**
**CABINET PLASSERAUD**
**84, rue d'Amsterdam**
**75440 Paris Cedex 09 (FR)**

(56) Documents cités:
**EP-A- 0 381 275**      **EP-A- 0 416 685**

- **IEEE INFOCOM ' 93. THE CONFERENCE ON COMPUTER COMMUNICATIONS PROCEEDINGS. TWELFTH ANNUAL JOINT CONFERENCE OF THE IEEE COMPUTER AND COMMUNICATIONS SOCIETIES. NETWORKING: FOUNDATION FOR THE FUTURE (CAT. NO.93CH3264-9), SAN FRANCISCO, CA, USA, 28 MARCH-, ISBN 0-8186-3580-0, 1993, LOS ALMITOS, CA, USA, IEEE COMNPUT. SOC. PRESS, USA, pages 376-383 vol.1, XP000419753 HARTANTO V F ET AL: "User-network policer: a new approach for ATM congestion control"**

**Description**

La présente invention concerne la régulation d'admission de données à un réseau de télécommunications ou "policing", par la technique dite "à seau percé", en anglais "leaky bucket", ou "à réserve de jetons", en anglais "credit manager". Elle concerne plus précisément un procédé et un dispositif d'admission de données issues de plusieurs sources à un réseau numérique de télécommunications qui permettent un lissage paramétré et progressif du débit d'information accédant à ce réseau, le débit crête des sources étant souvent proche de celui du réseau.

Les mécanismes de régulation d'accès sont essentiels au bon fonctionnement d'un réseau de télécommunications. Parmi les nombreuses variantes qui ont été étudiées, on peut citer celle dite à "seau percé". Cette technique est décrite dans la recommandation I.371 du CCITT, et apparaît comme la plus appropriée dans le domaine des réseaux numériques. Son utilisation a été préconisée dans divers cas, par exemple ceux du service dit SMDS ("Switched Multimegabit Data Services"), du réseau MAN ("Metropolitan Area Network"), ou du réseau de signalisation.

On trouve dans l'art antérieur divers dispositifs à réserve de jetons. Un résumé des modèles "à seau percé"/"réserve de jetons" existants est donné par M. Lemercier dans "Performance simulation of Leaky Buckets for ATM network access control", Modelling and performance evaluation of ATM technology, IFIP North Holland, 1993. Par ailleurs, un dispositif à réserve de jetons est décrit par J.W. Roberts, B. Bensaou et Y. Canetti dans "A traffic control framework for high speed data transmission", IFIP Transactions C-15: Modelling and performance evaluation of ATM technology, North Holland, 1993. Il comprend une seule réserve pouvant contenir un nombre maximal prédéterminé M de jetons qui sont régénérés à une cadence prédéterminée r. Un message est émis si et seulement si la réserve contient un nombre de jetons au moins égal à la longueur du message ; ces jetons sont alors extraits de la réserve. Si le nombre de jetons disponibles est insuffisant, le message n'est pas émis. Le dispositif comprend également une mémoire tampon d'accès organisée en file d'attente FIFO où sont stockés les messages entrants. Le premier message présent dans le tampon est envoyé dans le réseau à son débit d'arrivée tant que la réserve n'est pas vide, puis à un débit réduit qui est la cadence de régénération des jetons.

Le document EP-A-0 416 685 décrit une méthode de régulation de débit basée sur des codes portés par chaque cellule. EP-A-0 381 275 divulgue un contrôle des débits de données envoyés par chaque source, alors que des niveaux de service différents convenus avec chaque source de données sont proposés dans le document IEEE INFOCOM'93 : Proceedings volume 1 : «User-Network Policer : A New Approach for ATM Congestion Control», pp 376-383. Dans tous ces documents le débit d'émission est constant lors de toute l'émission d'un message donné.

L'objectif de l'utilisateur du réseau est d'utiliser au maximum les possibilités d'émission d'informations à débit crête maximal. Or une source numérique à débit variable a un comportement alternant entre des périodes d'activité ou rafales, pendant lesquelles elle émet des informations à débit crête, et des périodes d'inactivité ou silences. Un modèle "tout ou rien" à l'échelle rafale caractérise généralement assez bien ce comportement. Si le volume d'une rafale en amont excède le contenu initial de la réserve de jetons, cette rafale est alors écrêtée en aval. Après épuisement de la réserve, elle n'est plus écoulée sur le réseau qu'à la cadence r de régénération des jetons.

Afin d'optimiser les possibilités d'émission, il est possible de jouer sur les deux paramètres M et r. On parle de contrôle "préventif" du trafic. Un problème se pose lorsque les rafales ont des volumes très variables, comme c'est le cas à la sortie d'un réseau local de données : le débit crête de la source est largement supérieur au débit moyen, et, donc, de nombreuses rafales dont le volume est supérieur à M voient leur débit brutalement réduit en cours d'émission et ne profitent donc pas de la grande bande passante qui leur est offerte par le réseau. Si on prend une valeur élevée de r, ce qui signifie qu'on tolère un débit long terme r plus élevé, on perd en rentabilité économique. Si l'utilisateur se voit accorder une réserve M de jetons plus élevée, l'intérêt du mécanisme de régulation est limité, la source émettant alors quasiment toujours à son débit crête.

Pour éviter de perdre des messages, il convient de prévoir une mémoire tampon d'accès de taille appropriée. Si celle-ci est choisie trop grande, la mémoire sera utilisée de façon très inefficace, tandis que si elle est choisie trop petite, de nombreux messages seront perdus.

On a également proposé un contrôle "réactif", c'est-à-dire adaptatif, où les paramètres M et r sont modifiés en temps réel pour tenir compte de ce que les caractéristiques du trafic réel ne sont pas prédictibles. Cependant, dans un réseau à haut débit, cette modification est trop lente et le retard qu'elle introduit correspond à l'émission d'un volume très important d'informations, ce qui n'est pas acceptable.

La présente invention a notamment pour objectif de limiter ces inconvénients par un contrôle préventif du trafic où la régulation assure un lissage plus doux du débit d'émission de chaque source accédant au réseau.

Afin d'atteindre cet objectif, la présente invention propose un procédé d'admission de messages de données sous forme de cellules, provenant de plusieurs sources, à un réseau numérique de télécommunications, suivant lequel, pour chaque source, de débit crête déterminé p :

on mémorise les cellules provenant de la source dans une mémoire tampon d'accès organisée en file d'attente, on affecte à la source un nombre prédéterminé n (n étant un entier supérieur à 1) de réserves $(R_1,...,R_i,...,R_n)$ de

jetons, ayant des capacités de jetons déterminées ($M_1$,..., $M_i$,...,$M_n$) et on les régénère à des cadences prédéterminées ($r_1$,...,$r_i$,...,$r_n$) décroissantes et telles que :

$$\frac{M_1}{p\text{-}r_1} < ... < \frac{M_i\text{-}M_{i\text{-}1}}{r_{i\text{-}1}\text{-}r_i} < ... < \frac{M_n\text{-}M_{n\text{-}1}}{r_{n\text{-}1}\text{-}r_n},$$

soit :

$$\frac{M_i\text{-}M_{i\text{-}1}}{r_{i\text{-}1}\text{-}r_i} < \frac{M_{i+1}\text{-}M_i}{r_i\text{-}r_{i+1}}$$

pour tout entier i compris entre 1 et n-1, avec $M_0 = 0$ et $r_0 = p$, chaque jeton représentant une durée qui est une fraction de celle d'une cellule,

on émet une première cellule mémorisée dès que chacune des réserves contient un nombre de jetons au moins égal à la longueur de la cellule, au débit correspondant à la bande passante du réseau, en même temps qu'on décrémente toutes les réserves du nombre de jetons correspondant à la longueur de la cellule,

lorsque la première réserve $R_1$ est épuisée, on poursuit automatiquement l'émission des cellules mémorisées à la cadence $r_1$ de régénération de ladite première réserve jusqu'à ce que la seconde réserve soit épuisée,

on poursuit ensuite automatiquement l'émission à des débits successifs décroissants correspondant aux cadences de régénération $r_2$,...,$r_n$. Pour cela, pour tout entier i compris entre 1 et n-1, lorsque la $i^{ème}$ réserve $R_i$ est épuisée, on poursuit automatiquement l'émission des cellules mémorisées à la cadence $r_i$ de régénération de la $i^{ème}$ réserve $R_i$ jusqu'à ce que la $(i+1)^{ème}$ réserve $R_{i+1}$ soit épuisée.

Le terme "cellule" doit être interprété de façon large et comme désignant tout groupe de données sous forme numérique qui est individualisable et identifiable.

Les réserves peuvent être considérées comme des composants disposés en parallèle et se régénérant indépendamment les unes des autres. Leurs paramètres caractéristiques (capacité M et cadence de régénération r) seront choisis en fonction des caractéristiques du réseau et de celles de la source respective. Toutefois, il sera souvent intéressant d'adopter des réalisations simples.

Dans un premier cas, on choisit M et r pour les réserves correspondant à une même source de façon que les cadences $r_1$,...,$r_i$,...,$r_n$ décroissent arithmétiquement et les capacités de jetons croissent géométriquement.

On peut aussi prévoir des réserves de jetons disposées en parallèle dont les cadences de régénération décroissent géométriquement et les capacités de jetons croissent arithmétiquement.

Dans beaucoup de cas, et notamment celui des réseaux ATM et d'une source constituée par un réseau local de données, un bon compromis consiste à utiliser quatre réserves de jetons. Les cadences de régénération $r_1$ à $r_4$ peuvent constituer une suite arithmétique décroissante de premier terme h et de raison $\frac{d-h}{3}$ avec d < h où h et d sont des constantes prédéterminées ; on a alors

$$r_1 = h$$

$$r_2 = \frac{2h+d}{3}$$

$$r_3 = \frac{h+2d}{3}$$

$$r_4 = d.$$

Toutefois, le nombre de réserves peut être différent. Mais il sera en règle générale de 2 à 6. Lorsque le réseau est un réseau du type ATM, les messages sont des cellules de volume fixe. Lorsque le réseau est un réseau du type à relais de trames, les messages sont des paquets de volume variable.

En outre, afin de contrôler le comportement d'une source d'où proviennent les messages de données, dans le procédé de la présente invention,

(a) on définit un comportement théorique de la source par au moins un paramètre constituant un modèle,

(b) on mesure, à des instants prédéterminés, le débit d'émission des cellules,

(c) on vérifie si la série temporelle des débits d'émission mesurés est conforme audit comportement théorique, et, tant que ce n'est pas le cas,

(d) on répète les étapes (a) à (c) en modifiant ledit paramètre.

Dans un mode de réalisation particulier, le comportement théorique de la source est un comportement de type fractal. Un tel comportement sera défini ci-après.

La présente invention propose également un dispositif tel que défini dans la revendication 9.

D'autres caractéristiques et avantages de la présente invention ressortiront clairement de la description détaillée suivante d'un mode particulier de réalisation donné à titre d'exemple non limitatif. La description se réfère aux dessins annexés, dans lesquels :

- la figure 1 est une représentation schématique d'un dispositif constituant un mode particulier de réalisation de la présente invention ;
- la figure 2 est un organigramme représentant le déroulement du procédé ; et
- la figure 3 est une représentation graphique d'une fonction de lissage du débit d'émission d'une source mettant en oeuvre le procédé de la figure 2.

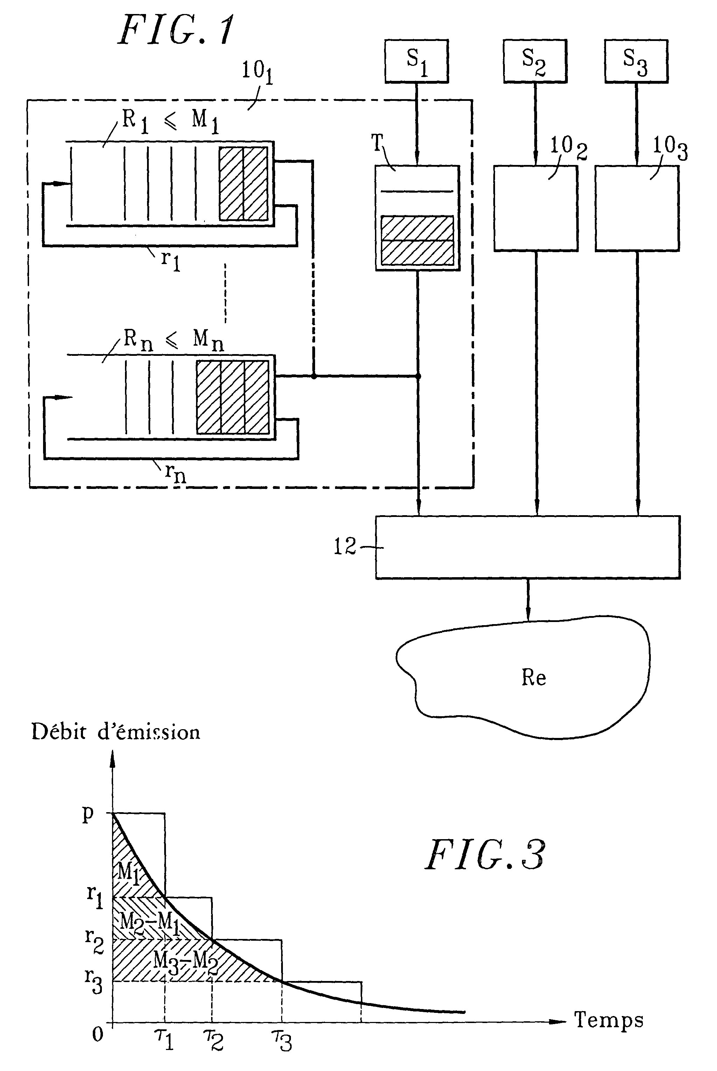

La figure 1 représente plusieurs dispositifs $10_1$, $10_2$, $10_3$ associés à des sources respectives $S_1$, $S_2$, $S_3$ qui accèdent à un réseau de télécommunications Re par un même frontal 12. Ces dispositifs présentent la même constitution, seul le dispositif $10_1$ sera décrit en détail. Il peut être regardé comme ayant un nombre fini n de réserves de jetons disposées en parallèle, et une mémoire tampon T organisée en file d'attente FIFO d'accès au réseau Re. Chaque réserve contient un nombre courant $R_i$ de jetons, inférieur à un nombre maximal $M_i$ de jetons, appelé aussi capacité de la réserve, qui sont régénérés à une cadence propre $r_i$. Une réserve peut donc être représentée par un compteur de jetons qui est incrémenté d'une unité à une cadence $r_i$. La régénération de chaque réserve s'effectue de façon indépendante et en parallèle avec celles des autres réserves. L'algorithme de régénération se présente sous la forme suivante :

```
répéter
    attendre 1/r_i
    si R_i<M_i
            alors R_i  ←  R_i+1
            sinon rien
    fin si
fin répéter
```

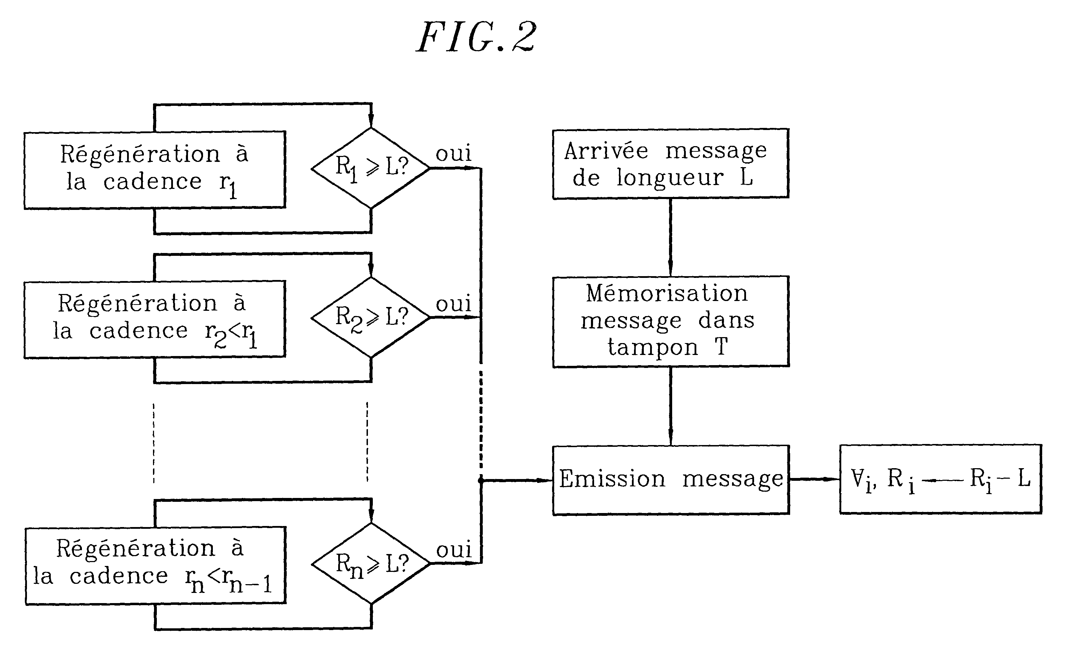

Comme le montre la figure 2, lorsqu'un message de longueur L sollicite l'accès au réseau, une longueur unité étant par exemple associée au plus petit message pouvant circuler sur le réseau, ce message est mis en attente FIFO dans le tampon d'accès tant que celui-ci n'est pas plein, et rejeté sinon. Si le message a pu être mémorisé, il sera émis dans le réseau si et seulement si chaque réserve contient un nombre $R_i$ de jetons au moins égal à L, auquel cas chaque réserve se vide de L jetons. L'algorithme d'accès au réseau est donc le suivant :

```
répéter
    si (R₁ et...et Rₙ) ≥ L
        alors émettre le message
            pour i = 1 à n
                Rᵢ ← Rᵢ - L
            fin pour
        sinon rien
    fin si
fin répéter
```

La présence de chacune des n réserves n'a d'intérêt que si, pour tout entier i compris entre 1 et n-1, les durées

$$\frac{M_i\text{-}M_{i\text{-}1}}{r_{i\text{-}1}\text{-}r_i}$$

avec $M_0 = 0$ et $r_0 = p$, où p est le débit crête de la source, sont toutes différentes, et si la condition suivante est remplie :

$$\frac{M_1}{p\text{-}r_1} < ... < \frac{M_i\text{-}M_{i\text{-}1}}{r_{i\text{-}1}\text{-}r_i} < ... < \frac{M_n\text{-}M_{n\text{-}1}}{r_{n\text{-}1}\text{-}r_n}$$

Si la source émet à débit p constamment supérieur aux $r_i$, les réserves vont se vider progressivement et $R_1$ sera la première réserve à ne pas disposer d'un nombre suffisant de jetons. Les messages suivants sont alors automatiquement émis au débit régulé $r_1$, qui est la cadence de régénération des jetons de $R_1$. Les autres réserves auront une influence régulatrice si et seulement si leurs cadences de régénération sont strictement décroissantes, c'est-à-dire $r_1 > ... > r_n$. En effet, la deuxième réserve se vide alors à la cadence $r_1 - r_2 > 0$. Lorsqu'elle est également vide, les messages sont automatiquement émis au débit $r_2$, et ainsi de suite.

La figure 3 représente un exemple de fonction en escalier décroissante ainsi obtenue à laquelle obéit le débit d'émission des messages en fonction du temps, et représente la courbe de lissage associée.

Dans un premier mode de réalisation, la source présente un trafic de type fractal, c'est-à-dire que la loi W du volume d'une rafale peut être approchée par une distribution de Pareto à décroissance lente de densité de probabilité en $\frac{w}{\gamma+1}$, où $\gamma$ est le plus petit réel positif tel que la loi W des rafales possède un moment d'ordre $\gamma$ infini, soit $E[W^\gamma] = +\infty$, le signe E désignant l'espérance mathématique. Le caractère fractal résulte de ce que $\gamma$ est compris entre 1 et 2, ce qui signifie que la loi des rafales possède une moyenne finie et une variance infinie. Le paramètre $\gamma$ représente ainsi l'exposant caractéristique des moments de la loi des rafales. Dans un tel mode de réalisation, on peut prendre des cadences de régénération $r_i$ décroissant arithmétiquement et des valeurs de capacité $M_i$ des réserves croissant géométriquement. En variante, on peut prendre des cadences $r_i$ à décroissance géométrique et des capacités $M_i$ à croissance arithmétique.

Le choix du nombre n de réserves dépend de la finesse de contrôle qu'on cherche à obtenir. A titre indicatif, pour un bas débit ($p \leq 128$ kbit/s), on pourra choisir deux réserves et $\gamma = 1,8$ ; pour un moyen débit (128 kbit/s $< p \leq 2$ Mbit/s), on pourra choisir trois réserves et $\gamma = 1,6$ ; pour un haut débit (2 Mbit/s $< p \leq 34$ Mbit/s), on pourra choisir quatre réserves et $\gamma = 1,4$ ; enfin, pour de très hauts débits ($p > 34$ Mbit/s), on pourra choisir plus de quatre réserves et $\gamma = 1,2$. Bien entendu, une telle stratégie peut être modifiée selon la situation particulière d'un réseau. Notamment, le paramètre $\gamma$ peut être fluctuant et dépendre de la source accédant au réseau.

En ce qui concerne les valeurs des cadences de régénération, on choisira par exemple avantageusement quatre réserves avec des cadences de régénération décroissant arithmétiquement, c'est-à-dire :

$$r_1 = h$$

$$r_2 = \frac{2h+d}{3}$$

$$r_3 = \frac{h+2d}{3}$$

$$r_4 = d$$

où h et d sont des constantes prédéterminées. La première réserve permet de réguler le débit crête de la source en le limitant à une valeur souhaitée h avec une tolérance de rafale intrinsèque (en anglais IBT, Intrinsic Burst Tolerance) valant $M_1$, tandis que les réserves suivantes permettent de contrôler les grands volumes de rafales émises assez fréquemment par la source.

Le choix des capacités $M_i$ dépend directement de la fonction de lissage qu'on souhaite réaliser. De manière générale, prendre

$$M_i = \int_0^{\tau_i} [f(s) - f(\tau_i)] \, ds, \, r_i = f(\tau_i)$$

permettra de réaliser la fonction de lissage $r = f(\tau)$. Les aires hachurées sur la figure 3 représentent les valeurs respectives de $M_1$, $M_2-M_1$, $M_3-M_2$. Le choix des instants $\tau_i$ est libre et dépend de la qualité de régulation recherchée.

A titre indicatif, on peut choisir les valeurs de $\tau_i$ de façon que la probabilité que le débit soit inférieur ou égal à r soit proportionnelle à r, ce qui correspond à un débit régulé uniformément réparti. Cette condition, pour un trafic fractal de paramètre $\gamma$ précédemment défini, et sans contrainte sur la valeur de $M_1$, conduit aux formules suivantes, pour lesquelles on impose à la dernière réserve que sa capacité $M_n$ soit égale au volume moyen d'une rafale, et que sa cadence de régénération $r_n$ soit égale au débit moyen de la source, soit $r_n = \nu p$ où $\nu$ est le taux d'activité de la source : pour tout i = 1,...,n,

$$r_i = [1 - \frac{i(1-\nu)}{n}]p$$

et

$$M_i = M_n \left[ \frac{\left(\frac{r_1}{r_i}\right)^{(1/\gamma)} + \frac{1}{\gamma}\frac{r_i}{r_1} - (1+\frac{1}{\gamma})\frac{r_i}{p}}{\left(\frac{r_1}{r_n}\right)^{(1/\gamma)} + \frac{1}{\gamma}\frac{r_n}{r_1} - (1+\frac{1}{\gamma})\frac{r_n}{p}} \right]$$

S'il existe une tolérance de rafale intrinsèque valant $M_1$, on peut prendre, toujours à titre indicatif,

$$r_1 = h$$

où h est solution de l'équation

$$\left(h\frac{1}{r_n}\right)^{(1/\gamma)} + \frac{1}{\gamma}\frac{r_n}{h} - (1+\frac{1}{\gamma})\frac{r_n}{p} = (1+\frac{1}{\gamma})(1-\frac{h}{p})\frac{M_n}{M_1}$$

et, pour tout i=2,...,n,

$$r_i = h - \frac{(i\text{-}1)\,(h\text{-}\nu p)}{n\text{-}1}$$

et

$$M_i = M_n \left[ \frac{\left(\dfrac{h}{r_i}\right)^{(1/\gamma)} + \dfrac{1}{\gamma}\dfrac{r_i}{h} - \left(1+\dfrac{1}{\gamma}\right)\dfrac{r_i}{p}}{\left(\dfrac{h}{r_n}\right)^{(1/\gamma)} + \dfrac{1}{\gamma}\dfrac{r_n}{h} - \left(1+\dfrac{1}{\gamma}\right)\dfrac{r_n}{p}} \right]$$

Dans le premier cas, c'est-à-dire sans contrainte de tolérance de rafale intrinsèque, pour une source de débit crête p = 10 Mbit/s, de taux d'activité $\nu$ = 4 % et de volume moyen de rafale $M_n$ = 100 kbit, on aura, avec $\gamma$ = 1,4 :

$r_1$ = 7,6 Mbit/s      $M_1$ = 5 kbit
$r_2$ = 5,2 Mbit/s      $M_2$ = 11,1 kbit
$r_3$ = 2,8 Mbit/s      $M_3$ = 22,3 kbit
$r_4$ = 0,4 Mbit/s      $M_4$ = 100 kbit

Dans les mêmes conditions mais avec un taux d'activité $\nu$ = 15 %, on obtient :

$r_1$ = 7,9 Mbit/s      $M_1$ = 11,6 kbit
$r_2$ = 5,7 Mbit/s      $M_2$ = 25 kbit
$r_3$ = 3,6 Mbit/s      $M_3$ = 46 kbit
$r_4$ = 1,5 Mbit/s      $M_4$ = 100 kbit

Ce choix spécifique des valeurs des capacités de réserves et de leurs cadences de régénération permet de mesurer effectivement le comportement d'une source contrôlée par le procédé de la présente invention. En effet, pour l'exemple précité où la source présente un trafic de type fractal de paramètre $\gamma$, il suffit de constituer la série temporelle, obtenue par observation, à des instants prédéterminés, des débits effectifs d'émission des cellules (débit $r_i$ si la ième réserve est épuisée, mais pas la i+1ème) afin de contrôler statistiquement que cette série est uniformément répartie entre toutes les valeurs possibles des débits non nuls, ce qui signifiera que la source possède bien un comportement de type fractal de paramètre $\gamma$. Si le résultat des mesures ne donne pas une répartition régulière, il faut les recommencer avec une autre valeur du paramètre $\gamma$ jusqu'à l'obtention de la répartition uniforme.

Ces étapes de contrôle du comportement de la source sont applicables de façon plus générale à tout type de comportement défini par un modèle caractérisé par au moins un paramètre.

On commence par définir ce modèle. Puis on mesure le débit d'émission des cellules, à des instants prédéterminés.

On vérifie alors si la série temporelle des débits d'émission mesurés obéit au modèle défini. Si ce n'est pas le cas, on modifie le paramètre qui caractérise le modèle, on réitère les étapes de mesure et de vérification de l'adéquation des mesures au modèle, ce jusqu'à obtenir cette adéquation.

La présente invention est adaptée à une très grande variété de trafics et trouve une application dans de nombreux types de réseaux large bande multiservices (notamment le RNIS large bande), d'interconnexion de réseaux locaux, et en particulier dans les réseaux dits ATM et les réseaux dits à relais de trames.

## Revendications

1.   Procédé d'admission de messages de données sous forme de cellules, provenant de plusieurs sources, à un réseau numérique de télécommunications, suivant lequel, pour chaque source de débit crête déterminé p :

on mémorise les cellules provenant de la source dans une mémoire tampon d'accès organisée en file d'attente, on affecte à la source un nombre prédéterminé n (n étant un entier supérieur à 1) de réserves ($R_1,...,R_i,...,R_n$) de jetons, ayant des capacités de jetons déterminées ($M_1,...,M_i,...,M_n$) et on les régénère à des cadences

prédéterminées($r_1$,...,$r_i$,...,$r_n$) décroissantes et telles que

$$\frac{M_1}{p-r_1} < .... < \frac{M_i-M_{i-1}}{r_{i-1}-r_i} < .... < \frac{M_n-M_{n-1}}{r_{n-1}-r_n}$$

soit

$$\frac{M_i-M_{i-1}}{r_{i-1}-r_i} < \frac{M_{i+1}-M_i}{r_i-r_{i+1}}$$

pour tout entier i compris entre 1 et n-1, avec $M_0 = 0$ et $R_0 = p$,
chaque jeton représentant une durée qui est une fraction de celle d'une cellule,
on émet une première cellule mémorisée dès que chacune des réserves contient un nombre de jetons au moins égal à la longueur de la cellule, au débit correspondant à la bande passante du réseau, en même temps qu'on décrémente toutes les réserves du nombre de jetons correspondant à la longueur de la cellule,
lorsque la première réserve $R_1$ est épuisée, on poursuit automatiquement l'émission des cellules mémorisées à la cadence $r_1$ de régénération de ladite première réserve jusqu'à ce que la seconde réserve soit épuisée,
et, pour tout entier i compris entre 1 et n-1, lorsque la i$^{ème}$ réserve $R_i$ est épuisée, on poursuit automatiquement l'émission des cellules mémorisées à la cadence $r_i$ de régénération de la i$^{ème}$ réserve $R_i$ jusqu'à ce que la (i+1)$^{ème}$ réserve $R_{i+1}$ soit épuisée.

**2.** Procédé selon la revendication 1, suivant lequel on prévoit un nombre fini de réserves de jetons traitées en parallèle dont les cadences de régénération décroissent arithmétiquement et les capacités de jetons croissent géométriquement.

**3.** Procédé selon la revendication 1, suivant lequel on prévoit un nombre fini de réserves de jetons traitées en parallèle dont les cadences de régénération décroissent géométriquement et les capacités de jetons croissent arithmétiquement.

**4.** Procédé selon la revendication 2, suivant lequel on prévoit quatre réserves de jetons dont les cadences de régénération $r_1$ à $r_4$ obéissent à une suite arithmétique décroissante de premier terme h et de raison $\frac{d-h}{3}$ avec d < h où h et d sont des constantes prédéterminées, soit

$$r_1 = h$$

$$r_2 = \frac{2h+d}{3}$$

$$r_3 = \frac{h+2d}{3}$$

$$r_4 = d$$

**5.** Procédé selon la revendication 1, **caractérisé en ce que** lesdits messages sont des cellules de volume fixe et le réseau est un réseau du type ATM.

**6.** Procédé selon la revendication 1, **caractérisé en ce que** lesdits messages sont des paquets de volume variable et le réseau est un réseau du type à relais de trames.

**7.** Procédé selon l'une quelconque des revendications 1 à 6, **caractérisé en ce qu'**en outre, pour contrôler le comportement d'une source d'où proviennent les messages de données,

(a) on définit un comportement théorique de la source par au moins un paramètre constituant un modèle,
(b) on mesure, à des instants prédéterminés, le débit d'émission des cellules,

(c) on vérifie si la série temporelle des débits d'émission mesurés est conforme audit comportement théorique, et, tant que ce n'est pas le cas,
(d) on répète les étapes (a) à (c) en modifiant ledit paramètre.

**8.** Procédé selon la revendication 7, **caractérisé en ce que** ledit comportement théorique de la source est un comportement de type fractal.

**9.** Dispositif d'admission de messages de données sous forme de cellules, provenant de plusieurs sources, à un réseau numérique de télécommunications, comprenant, pour chaque source, de débit crête déterminé p :

une mémoire tampon d'accès au réseau organisée en file d'attente, et dont l'entrée est reliée à la source,
un nombre prédéterminé (n étant un entier compris entre 2 et 6) de réserves de jetons $(R_1,...,R_i,...,R_n)$ ayant des capacités de jetons déterminées $(M_1,...,M_i,...,M_n)$,
des moyens pour régénérer les réserves à des cadences prédéterminées $(r_1,...r_i,...,r_n)$ décroissantes et telles que

$$\frac{M_1}{p\text{-}r_1}<....<\frac{M_i\text{-}M_{i-1}}{r_{i-1}\text{-}r_i}<....<\frac{M_n\text{-}M_{n-1}}{r_{n-1}\text{-}r_n}$$

soit

$$\frac{M_i\text{-}M_{i-1}}{r_{i-1}\text{-}r_i}<\frac{M_{i+1}\text{-}M_i}{r_i\text{-}r_{i+1}}$$

pour tout entier i compris entre 1 et n-1, avec $M_0 = 0$ et $R_0 = p$,
des moyens pour, en réponse à la présence d'au moins une cellule dans la mémoire tampon d'accès, déterminer si chacune des réserves contient un nombre de jetons au moins égal à la longueur de la cellule, autoriser l'accès d'une première cellule mémorisée au réseau au débit contrôlé par le réseau, en décrémentant toutes les réserves d'un nombre de jetons correspondant à la longueur de la cellule, puis, automatiquement, des cellules ultérieures mémorisées, au débit correspondant à la cadence $r_i$ de régénération de la $i^{ème}$ réserve $R_i$, lorsque la $i^{ème}$ réserve Ri est épuisée, et jusqu'à ce que la $(i+1)^{ème}$ réserve $R_{i+1}$ soit épuisée pour tout entier i compris entre 1 et n-1.

**Patentansprüche**

**1.** Verfahren zur Zugangsgewährung von zellenförmigen Datenmitteilungen, welche aus mehreren Quellen stammen, in ein digitales Kommunikationsnetz, wobei für jede Quelle mit einer bestimmten Maximalrate p:

Speichern der aus der Quelle stammenden Zellen in einem Pufferspeicher, dessen Zugriff als Warteschlange organisiert ist,

Zuweisen einer vorbestimmten Zahl n (wobei n eine ganze Zahl größer als 1 ist) von Reserven $(R_1,...,R_i,..., R_n)$ von Krediteinheiten an die Quelle, mit vorbestimmten Krediteinheitkapazitäten $(M_1,..., M_i,..., M_n)$, und deren Regenerieren mit vorbestimmten abnehmenden Takten $(r_1,..., r_i,..., r_n)$, wobei

$$\frac{M_1}{p\text{-}r_1}< ... <\frac{M_i\text{-}M_{i-1}}{r_{i-1}\text{-}r_i}< ... <\frac{M_n\text{-}M_{n-1}}{r_{n-1}\text{-}r_n}$$

d.h.

$$\frac{M_i\text{-}M_{i-1}}{r_{i-1}\text{-}r_i}<\frac{M_{i+1}\text{-}M_i}{r_i\text{-}r_{i+1}}$$

für jedes ganzzahlige i zwischen 1 und n-1, wobei $M_0 = 0$ und $R_0 = p$;
wobei jede Krediteinheit eine Dauer darstellt, welche ein Bruchteil jener einer Zelle ist,

Aussenden einer ersten gespeicherten Zelle sobald jede der Reserven eine Zahl von Krediteinheiten enthält, die mindestens gleich der Länge der Zelle ist, mit der dem Passband des Netzes entsprechenden Rate, und gleichzeitig Dekrementieren aller Reserven um die Zahl von Krediteinheiten entsprechend der Länge der Zelle,

wenn die erste Reserve $R_1$ aufgebraucht ist, automatisch Weiterverfolgen der Aussendung von gespeicherten Zellen mit dem Regenerierungstakt $r_1$ der ersten Reserve bis die zweite Reserve aufgebraucht ist, und

für jedes ganzzahlige i zwischen 1 und n-1, wenn die i-te Reserve $R_i$ aufgebraucht ist, automatisch Weiterverfolgen der Aussendung von gespeicherten Zellen mit dem Regenerationstakt $r_i$ der i-ten Reserve $R_i$, bis die (i+1)-te Reserve $R_{i+1}$ aufgebraucht ist.

2. Verfahren nach Anspruch 1, wobei eine endliche Zahl von parallel behandelten Krediteinheitreserven vorgesehen ist, deren Regenerationstakte arithmetisch abnehmen und deren Krediteinheitkapazitäten geometrisch zunehmen.

3. Verfahren nach Anspruch 1, wobei eine endliche Zahl von parallel behandelten Krediteinheitreserven vorgesehen ist, deren Regenerationstakte geometrisch abnehmen und deren Krediteinheitkapazitäten arithmetisch zunehmen

4. Verfahren nach Anspruch 2, wobei vier Krediteinheitreserven vorgesehen sind, deren Regenerationstakte $r_1$ bis $r_4$ einer abnehmenden arithmetischen Folge mit erstem Term h und Verhältnis $\frac{d-h}{3}$ gehorchen, mit d < h, wobei h und d vorbestimmte Konstanten sind, d.h.

$$r_1 = h$$

$$r_2 = \frac{2h + d}{3}$$

$$r_3 = \frac{h + 2d}{3}$$

$$r_4 = d$$

5. Verfahren nach Anspruch 1, **dadurch gekennzeichnet, dass** die Mitteilungen Zellen fester Größe sind, und das Netz ein ATM-Netz ist.

6. Verfahren nach Anspruch 1, **dadurch gekennzeichnet, dass** die Mitteilungen Pakete von variabler Größe sind, und das Netz ein Rahmenweiterleitungsnetz ist.

7. Verfahren nach einem der Ansprüche 1 bis 6 **gekennzeichnet durch**, darüber hinaus um das Verhalten einer Quelle zu kontrollieren, aus welcher die Datenmitteilungen stammen,

(a) Definieren eines theoretischen Verhaltens der Quelle **durch** mindestens einen ein Modell bildenden Parameter,

(b) Messen der Aussenderate der Zellen zu vorbestimmten Zeitpunkten,

(c) Verifizieren ob die zeitliche Serie der gemessenen Aussenderaten mit dem theoretischen Verhalten übereinstimmt, und wenn dies nicht der Fall ist,

(d) Wiederholen der Schritte (a) bis (c) unter Modifizierung des Parameters.

8. Verfahren nach Anspruch 7, **dadurch gekennzeichnet, dass** das theoretische Verhalten der Quelle ein Fraktalverhalten ist.

9. Vorrichtung zur Zugangsgewährung von zellenförmigen Datenmitteilungen, welche aus mehreren Quellen stammen, in ein digitales Telekommunikationsnetz, umfassend für jede Quelle mit einer bestimmten Maximalrate p:

einen als Warteschlange organisierten Netzzugriffspufferspeicher, dessen Eingang mit der Quelle verbunden ist,

eine vorbestimmte Zahl (wobei n eine ganze Zahl zwischen 2 und 6 ist) von Krediteinheitreserven ($R_1$,..., $R_i$,..., $R_n$) mit vorbestimmten Krediteinheitkapazitäten ($M_1$,... $M_i$,..., $M_n$),

Mittel zur Regenerierung der Reserven mit vorbestimmten abnehmenden Takten ($r_1$,..., $r_i$,..., $r_n$), wobei

$$\frac{M_1}{p-r_1} < \ldots < \frac{M_i-M_{i-1}}{r_{i-1}-r_i} < \ldots < \frac{M_n-M_{n-1}}{r_{n-1}-r_n}$$

d.h.

$$\frac{M_i-M_{i-1}}{r_{i-1}-r_i} < \frac{M_{i+1}-M_i}{r_i-r_{i+1}}$$

für jedes ganzzahlige i zwischen 1 und n-1, mit $M_0 = 0$ und $R_0 = p$,

Mittel, ansprechbar auf das Vorhandensein mindestens einer Zelle im Zugriffspufferspeicher, zur Bestimmung ob jede der Reserven eine Zahl von Krediteinheiten enthält, welche mindestens gleich der Länge der Zelle ist, zum Autorisieren des Zugangs einer ersten gespeicherten Zelle zum Netz mit der durch das Netz gesteuerten Rate, mit einer Dekrementierung aller Reserven um eine Zahl von Krediteinheiten, die der Länge der Zelle entspricht, und dann automatisch der folgenden gespeicherten Zellen, mit dem Regenerationstakt $r_i$ der i-ten Reserve $R_i$ entsprechenden Rate, wenn die i-te Reserve $R_i$ aufgebraucht ist, und bis die (i+1)-te Reserve $R_{i+1}$ aufgebraucht ist für jedes ganzzahlige i zwischen 1 und n-1.

## Claims

1. A method for intake of data messages originating from a plurality of sources and each consisting of cells, and for admitting said messages into a digital telecommunications network, said method comprising the following steps, for each source having a predetermined peak transmission rate p :

memorizing the cells originating from said source in an access buffer arranged as a queue,
allocating to said source a predetermined number n (n being an integer greater than 1) of reserves ($R_1$, ..., $R_i$, ..., $R_n$) of tokens, each token representing a time duration which is a fraction of a cell duration, the reserves having respective determined capacities of tokens ($M_1$, ..., $M_i$, ..., $M_n$), and replenishing said reserves at respective predetermined rates ($r_1$, ..., $r_i$, ..., $r_n$), with $r_1 > \ldots > r_i > \ldots > r_n$ and such that :

$$\frac{M_1}{p-r_1} < \ldots < \frac{M_i-M_{i-1}}{r_{i-1}-r_i} < \ldots < \frac{M_n-M_{n-1}}{r_{n-1}-r_n},$$

i.e.

$$\frac{M_i-M_{i-1}}{r_{i-1}-r_i} < \frac{M_{i+1}-M_i}{r_i-r_{i+1}}$$

for any integer i lying in the range 1 to n-1, with $M_0 = 0$ and $r_0 = p$,
sending a first memorized cell as soon as each of said reserves contains a number of tokens that is at least equal to a length of said cell, at the rate corresponding to a bandwith of the network, and simultaneously decreasing all said reserves by a number of tokens that corresponds to the length of said cell,

once the first reserve $R_1$ is exhausted, continuing to send the memorized cells automatically at the rate $r_1$ of replenishment of said first reserve until the second reserve is exhausted,

and, for any integer i lying in the range 1 to n-1, when the $i^{th}$ reserve $r_i$ is exhausted, continuing to send memorized cells automatically at the rate $r_i$ of replenishment of the $i^{th}$ reserve $R_i$ until the $(i+1)^{th}$ reserve $R_{i+1}$ is exhausted.

2. A method according to claim 1, wherein it is provided a finite number of token reserves handled in parallel, the replenishment rates of which decrease in arithmetic progression and the token capacities of which increase in geometric progression.

3. A method according to claim 1, wherein it is provided a finite number of token reserves handled in parallel, the replenishment rates of which decrease in geometric progression and the token capacities of which increase in arithmetic progression.

4. A method according to claim 2, wherein it is provided four token reserves, the resplenishment rates $r_1$ to $r_4$ of which follow a decreasing arithmetic progression having a first term h and a ratio (d-h)/3, with d<h, where h and d are predetermined constants, whereby :

$$r_1 = h$$

$$r_2 = (2h+d)/3$$

$$r_3 = (h+2d)/3$$

$$r_4 = d$$

5. A method according to claim 1, **characterized in that** said messages are cells having a fixed size and the network is an ATM type network.

6. A method according to claim 1, **characterized in that** said messages are packets of varying size and the network is a frame relay type network.

7. A method according to anyone of the claims 1 to 6, further **characterized in that**, for controlling the behavior of a source from which the data messages are originating,

(a) a theoretical behavior for the source is defined by means of at least one parameter constituting a model,
(b) the transmission rate of the cells is measured at predetermined instants,
(c) it is checked whether a time series of measured transmission rates is in conformity with said theoretical behavior, and, as long as it is not,
(d) steps (a)-(c) are repeated with modification of said parameter.

8. A method according to claim 7, **characterized in that** said theoretical behavior of the source is a fractal type behavior.

9. An apparatus for intake of data messages originating from a plurality of sources and each consisting of cells, and for admitting said messages into a digital telecommunications network, said apparatus comprising, for each source having a predetermined peak transmission rate p :

a buffer memory for access to said network, said buffer memory being arranged as a queue and having an inlet which is connected to the source,
a predetermined number n (n being an integer lying in the range 2 to 6) of reserves of tokens ($R_1$, ..., $R_i$, ..., $R_n$) having respective determined token capacities ($M_1$, ..., $M_i$, ..., $M_n$),
means for replenishing the reserves at predetermined rates ($r_1$, ..., $R_i$, ..., $R_n$), with $r_1 > ... > r_i > ... > r_n$ and such that :

$$\frac{M_1}{p-r_1} < \ldots < \frac{M_i-M_{i-1}}{r_{i-1}-r_i} < \ldots < \frac{M_n-M_{n-1}}{r_{n-1}-r_n}$$

i.e.

$$\frac{M_i-M_{i-1}}{r_{i-1}-r_i} < \frac{M_{i+1}-M_i}{r_i-r_{i+1}}$$

for any integer i lying in the range 1 to n-1, with $M_0 = 0$ and $R_0 = p$,
means for, in response to a presence of at least one cell in the access buffer memory, determining whether each of the reserves contains a number of tokens that is at least equal to a length of said cell, for authorizing access by a first memorized cell to the network at a transmission rate controlled by the network, while decrementing all the reserves by a number of tokens equal to the length of the cell, and then, automatically authorizing access by the next memorized cells at the transmission rate corresponding to the replenishment rate $r_i$ of the $i^{th}$ reserve $R_i$, as the $i^{th}$ reserve is exhausted, and until the $(i+1)^{th}$ reserve $R_{i+1}$ is exhausted, for any integer i lying in the range 1 to (n-1).

## FIG.1

$10_1$

$R_1 \leqslant M_1$

$r_1$

$R_n \leqslant M_n$

$r_n$

$S_1$    $S_2$    $S_3$

T

$10_2$    $10_3$

12

Re

## FIG.3

Débit d'émission

p

$r_1$

$M_1$

$M_2-M_1$

$r_2$

$M_3-M_2$

$r_3$

0    $\tau_1$    $\tau_2$    $\tau_3$    Temps

## FIG.2

```
┌─────────────────────┐      ╱╲
│   Régénération  à   │     ╱    ╲      oui
│   la cadence r₁     │────▷ R₁ ⩾ L? ─────────┐
└─────────────────────┘     ╲    ╱             │
                             ╲╱                │

┌─────────────────────┐      ╱╲                │      ┌─────────────────────┐
│   Régénération  à   │     ╱    ╲      oui     │      │   Arrivée  message  │
│  la cadence r₂<r₁   │────▷ R₂ ⩾ L? ─────────┐ │      │   de longueur  L    │
└─────────────────────┘     ╲    ╱             │ │      └─────────────────────┘
                             ╲╱                │ │                │
                                               │ │                ▼
                 ⋮                 ⋮           │ │      ┌─────────────────────┐
                                               │ │      │     Mémorisation    │
                                               │ │      │   message  dans     │
                                               │ │      │     tampon  T       │
                                               │ │      └─────────────────────┘
                                               │ │                │
                                               │ │                ▼
┌─────────────────────┐      ╱╲                │ │      ┌──────────────────┐      ┌──────────────────┐
│   Régénération  à   │     ╱    ╲      oui     └─┴─────▷│ Emission message │─────▷│ ∀ᵢ, Rᵢ ⟵ Rᵢ − L │
│ la cadence rₙ<rₙ₋₁  │────▷ Rₙ ⩾ L? ─────────────────▷│                  │      │                  │
└─────────────────────┘     ╲    ╱                      └──────────────────┘      └──────────────────┘
                             ╲╱
```

$R_1 \geqslant L?$

$R_2 \geqslant L?$

$R_n \geqslant L?$

$\forall_i,\ R_i \longleftarrow R_i - L$

EP 0 749 226 B1